# EUROPEAN PATENT SPECIFICATION

(11) **EP 3 141 208 B1**
(45) Date of publication and mention of the grant of the patent: **25.04.2018**
(21) Application number: 16188204.8
(22) Date of filing: 09.09.2016
(51) Int. Cl.: A61C 5/00

(54) **DENTAL OBTURATOR MADE OF GUTTA PERCHA COMPONENTS**
DENTALOBTURATOR, DER AUS GUTTAPERCHA-KOMPONENTEN HERGESTELLT IST
OBTURATEUR DENTAIRE CONSTITUÉ DE COMPOSANTS DE GUTTA PERCHA

(30) Priority: 10.09.2015 US 201562216846 P
(43) Date of publication of application: 15.03.2017
(73) Proprietor: Kerr Corporation, Orange, CA 92867 (US)
(72) Inventor: MARETTO, Emanuele, Orange, CA 92866 (US); LAURA, Marie, Newport Beach, CA 92663 (US); LUI, David Tak Kei, Chino Hills, CA 91709 (US); SOUNDARARAJAN, Gopikrishnan, Santa Clara, CA 95051 (US)
(74) Representative: Rupp, Christian

(56) References cited:
- US-A- 4 480 996
- US-A- 5 893 713
- US-A1- 2004 248 067
- US-B1- 7 665 991

## Description

This invention relates to a dental obturator.

Dental root canal treatment generally involves three stages: shaping, cleaning, and obturation (generally involving filling and sealing). Ultimately, the goal of a root canal treatment is to eliminate the infection inside the dental root system and to tightly seal or obturate the small opening at the end of the root canal (i.e., the apex). Failure to completely seal the apex or the root canal leads to micro-leakage, which will allow future bacteria colonization inside the root canal system, re-infection, and possible loss of the tooth. Micro-leakage is the most common cause of tooth failure.

Traditional methods of obturating an extirpated or stripped root canal commonly involve packing the root canal with a thermoplastic material, such as gutta percha (e.g., trans 1-4 polyisoprene or polysulfone), so that the root canal space is filled with the thermoplastic material. The filling material is generally shaped into a slender cone having a small taper angle (e.g., 5 to 10 degrees). Preferably, the space is filled with the thermoplastic material forming a seal that prevents leakage between the root canal and the surrounding tissue. To ensure that the thermoplastic material is positioned adjacent to the apex for a proper seal, clinicians attempt to locate the apex. Traditional methods of locating the apex, such as using x-rays and radiovisiographs, do not always provide the clinician with an accurate view of whether the thermoplastic material has reached filled the apex of the root canal.

A satisfactory seal can be formed by softening the thermoplastic material by heating it prior to inserting it into the root canal. Conventionally, the gutta percha is applied to a carrier, often made of plastic, prior to insertion into the root canal in order to facilitate insertion. A carrier may be pre-coated with the gutta percha. However, carriers pre-coated with gutta percha are expensive to purchase, and a less expensive means is desired for applying gutta percha to a carrier. The carrier is often designed to permanently stay inside the root canal system as part of the final seal. When root canal retreatment is needed, the presence of the carrier may present difficulties when attempting to regain access to the apex area of the root canal. For instance, a rotating file often has difficulty penetrating the carrier, and instead simply slides to one side of the carrier.

US 5,893,713 A discloses a dental probe having a superelastic plugger element and a method of using the same in filling a root canal. US 7,665,991 B1 discloses an endodontic obturator for filling a root canal.

By providing a carrier formed of a thermoset material (e.g., gutta percha), retreatment of a root canal may be simplified. Ideally, the improved carrier composition would have a desirable stiffness while generally being capable of maintaining its shape after the application of heat (e.g., during retreatment of a tooth). Additionally, providing an improved method of locating the apex of the root canal during obturation will improve the efficacy of the seal.

The present invention provides an endodontic obturator for obturating a root canal including a wire made of a conductive material, a carrier configured to releasably couple to the wire, the carrier being made of a first thermoset material, and a sheath configured to receive the carrier, the sheath being made of a second thermoset material. A melting temperature of the second thermoset material is lower than a melting temperature of the first thermoset material.

The present invention further provides a method of making an endodontic obturator including molding a carrier made of a first thermoset material around a conductive wire, the carrier configured to be releasably coupled to the wire. Molding a sheath made of a second thermoset material and coupling the carrier and the sheath, wherein a melding temperature of the second thermoset material is lower than a melting temperature of the first thermoset material.

The invention will now be further described by way of example with reference to the accompanying drawings, in which:
FIG. 1 is a perspective view of an endodontic obturator according to an embodiment.
FIG. 2A is a cross-sectional view of the endodontic obturator of FIG. 1 positioned in a root canal.
FIGS. 2B and 2C are cross-sectional views of the endodontic obturator of FIG. 1 during removal of the wire.
FIG. 2D is a cross-sectional view of the endodontic obturator of FIG. 1 after the wire has been removed.
FIG. 3 is a cross-sectional view of a tooth after the obturation of a root canal with an endodontic obturator according to an embodiment.

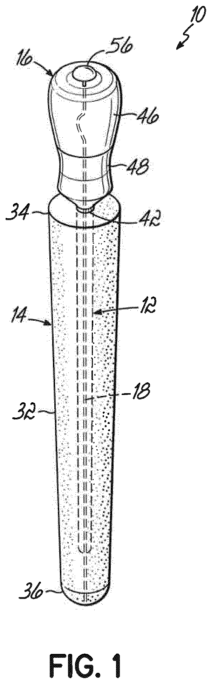

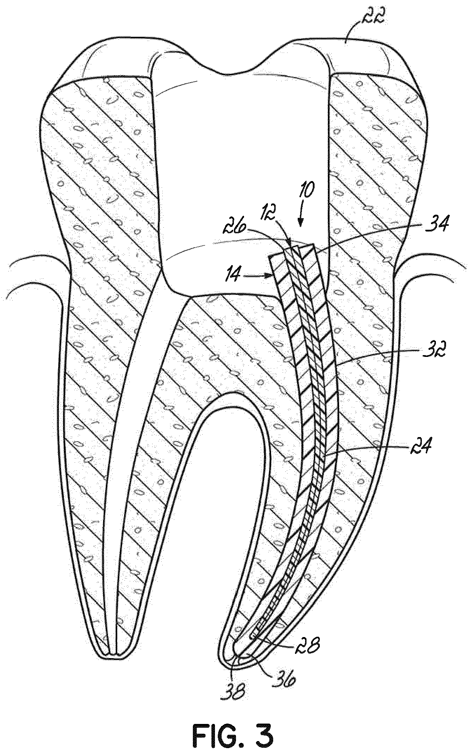

Referring first to FIG. 1, in one embodiment of the invention, an endodontic obturator 10 includes a carrier 12 and a sheath 14. The carrier 12 and the sheath 14 are coupled, for example, via an interference fit. The endodontic obturator 10 further includes a handle 16 coupled to a wire 18, which extends through carrier 12 and sheath 14. The endodontic obturator 10 is configured to seal a stripped root canal 20 during a root canal treatment of a tooth 22 (as shown in FIG. 3). The wire 18, in an embodiment, is used to properly position the endodontic obturator 10 (discussed further below).

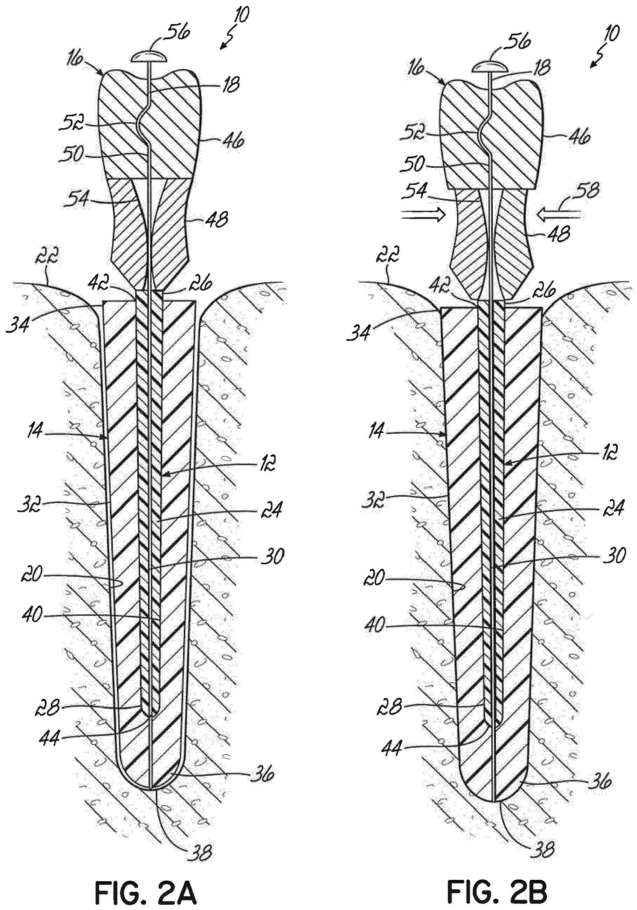

With reference now to FIG. 2A, the carrier 12 has an elongate, tapered body 24 having a first end 26 (proximal) and a second end 28 (distal). The carrier 12 is configured to releasably couple to the wire 18. When the wire 18 is releasably coupled to the carrier 12, the wire 18 extends within a cavity 30. In an embodiment, the carrier 12 is formed of gutta percha having a high melting temperature. The gutta percha may be formed (e.g., molded) into the tapered body 24 of the carrier 12 that, when cooled, may substantially hold its shape during the expected lifetime of the obturation. The gutta percha may have relatively poor tear properties compared to conventional plastic carriers, thus making it easy to penetrate the carrier 12 with a rotating file (e.g., during root canal retreatment). One of ordinary skill will recognize that other natural or synthetic heat flowable polymeric materials that are bio-inert or bio-compatible when disposed in dental root canals may be used to form the carrier 12.

With further reference to FIG. 2A, the sheath 14 is defined by an elongate, tapered body 32 having a first end 34 (proximal) and a second end 36 (distal). The sheath 14 is designed to be positioned in the root canal 20, and the second end 36 is configured to seal an apex 38 of the root canal 20 during treatment. The sheath 14 is configured to releasably couple to the wire 18, similar to the carrier 12. The sheath 14 includes a cavity 40. The cavity 40 is open to an aperture 42 at the first end 34 of the tapered body 32 and terminates in a tip 44. The cavity 40 is configured to surround the carrier 12. In an embodiment where the carrier 12 and the sheath 14 are coupled via an interference fit, the cavity 40 may be configured to slidably receive the carrier 12. The sheath 14 is formed of gutta percha having a low melting temperature. More particularly, the sheath 14 is formed of a gutta percha having a melting temperature that is lower than the melting temperature of the gutta percha that forms the carrier 12. In an embodiment, sheath 14 may have a melting temperature of about 80 °C to about 90 °C, and carrier 12 may have a melting temperature of about 180 °C to about 220 °C. In this configuration, the endodontic obturator 10 includes an inner core (e.g., the carrier 12) of a material that will remain relatively rigid and stable while an outer shell (e.g., the sheath 14) is softened for placement in and sealing of the root canal 20.

In an embodiment, the thermoset material (e.g., gutta percha) used to form the carrier 12 and the sheath 14 may include a matrix of thermoset material with heat conductive particles dispersed in the matrix (not shown). The heat conductive particles improve the thermal mechanical properties of gutta percha, for example, by increasing the heat conductivity of the gutta percha. Using the improved gutta percha material in the endodontic obturator 10 reduces the operating temperature for root canal treatment procedures. Additionally, when the sheath 14 cools, the gutta percha undergoes a slight dimensional expansion instead of the conventional shrinkage, which allows for a better seal between the endodontic obturator 10 and the root canal 20. The heat conductive particles may be of sub-micron size and are preferably bio-inert. The shape of the particles may be regular, irregular, symmetrical or non-symmetrical, having random or specific geometrical shapes (e.g., spherical, ellipsoidal, disc, etc.). The characteristic size of the particles is on the order of 1 micron or less and need not be uniform. In an embodiment, the characteristic size is 0.5 to 1 micron. In another embodiment, the characteristic size is on the order of 100 nm or less, in the nanoparticle range. The heat conductive particles may be generally or substantially the same size, or have random sizes within the prescribed size range. The particles may be made of high heat conductive metal, non-metal, organic or inorganic materials, including without limitations zinc oxide, magnesium silicate, gold, silver, titanium, diamond, etc. The type, quantity, and/or size of the heat conductive particles may be varied to alter the thermal characteristics of the gutta percha material. For example, a larger quantity of heat conductive metal particles may be added to the matrix to create a lower melting temperature. For another example, non-conductive particles may also be added with the heat conductive particles to create a higher melting temperature.

With reference again to FIG. 2A, the handle 16 includes a first handle portion 46 and a second handle portion 48. In an embodiment, the first and second handle portions 46, 48 may be dimensioned to be manipulated between the thumb and forefinger of the clinician. Alternatively, the first and second handle portions 46, 48 may be dimensioned to be manipulated by a dental tool, such as dental tweezers. The first and second handle portions 46, 48 are releasably coupled together. More specifically, the handle 16 may include one or more features that releasably couple the first and second handle portions 46, 48. In an embodiment, the handle 16 may be molded to include a frangible projection or lip (not shown) that couples the first and second handle portions 46, 48. When the clinician squeezes the second handle portion 48, the lip may disconnect from the first handle portion 46, which can then be moved away from the second handle portion 48. The handle 16 is adjacent to the carrier 12 and the sheath 14. The wire extends through both the first and second handle portions 46, 48. The first handle portion 46 includes a channel 50 configured to secure the wire 18. In an embodiment, the first handle portion 46 includes a crimp 52 that secures the wire 18 in the channel 50. The second handle portion 48 includes a channel 54 configured to slidably receive the wire 18. When the first and second handle portions 46, 48 are separated, the clinician may move the first handle portion 46 to draw the wire 18 through the second handle portion 48.

Still referring to FIG. 2A, the wire 18 extends from the first handle portion 46, through the second handle portion 48, through the cavity 30 of the carrier 12, and to the second end 36 of the sheath 14. The wire 18 may provide additional stiffness to the carrier 12 and the sheath 14. In an embodiment, the wire 18 may be conductive (e.g., made of metal) and may include a metal contact portion 56 that extends from the first handle portion 46. In this manner, the wire 18 can be used as an electrode for an apex locator device (not shown) to locate the apex 38 of a root canal 20. A wire from the apex locator device may be attached to the metal contact portion 56 at the handle 16, and the endodontic obturator 10 may act as the probe for the apex locator device. The metal may be made of, for example, stainless steel, NiTi, or copper.

A method of using the endodontic obturator 10 during a dental root canal treatment process will be described with reference to FIGS. 2A-2D. In an embodiment, the clinician inserts the endodontic obturator 10 into the stripped root canal 20. The clinician may connect the metal contact portion 56 to an apex locator device (not shown) to locate the apex 38 of the root canal 20. Using the apex locator device, the clinician may adjust the position of the endodontic obturator 10. When the endodontic obturator 10 is in the desired position in the root canal 20, heat is applied to the sheath 14 using a heating tool (e.g., a heat gun). As the gutta percha matrix of the sheath 14 softens under the applied heat, the shape of the sheath 14 adjusts to fill and seal the root canal 20. Ideally, sufficient heat reaches the second end 36 of the sheath 14 to mold the second end 36 to completely fill the apex 38 of the root canal 20, as shown in FIG. 2B. During this process, the conductive particles within the gutta percha matrix facilitate heat conduction through the sheath 14 to the second end 36. However, because of the higher melting temperature of the gutta percha used to form the carrier 12, the carrier 12 generally retains its shape and rigidity while the sheath 14 is heated. Alternatively, the endodontic obturator 10 may undergo heating before being inserted into the root canal 20. For instance, the endodontic obturator 10 may be softened in an oven.

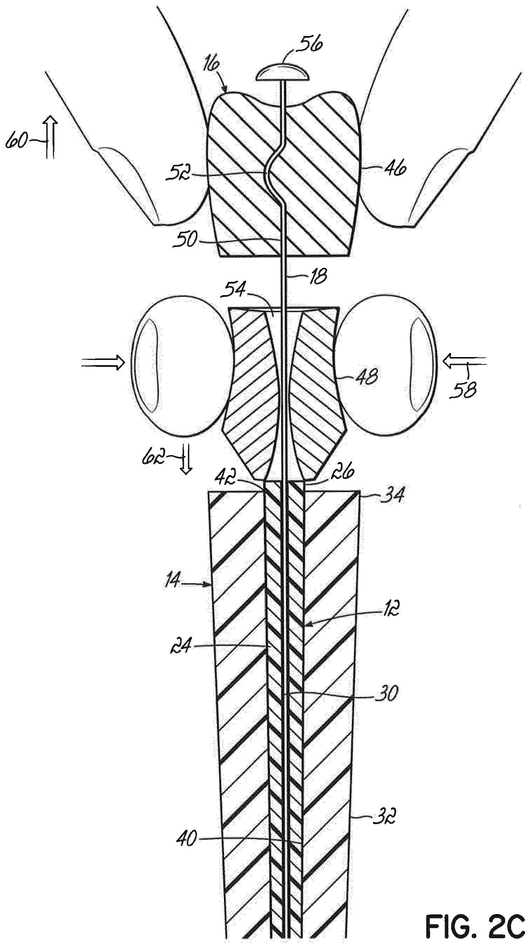

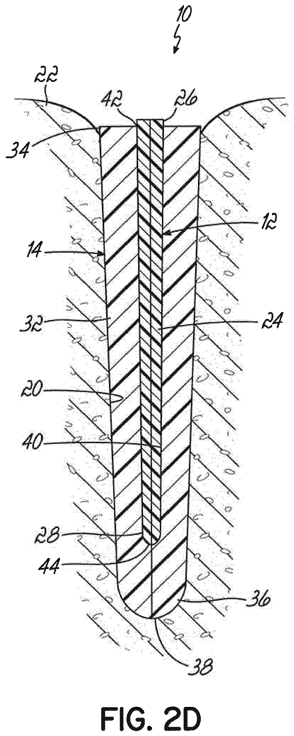

Once the sheath 14 has sealed the apex 38 of the root canal 20, the clinician may remove the wire 18 from the endodontic obturator 10. As shown in FIGS. 2B and 2C, the clinician may grip or pinch both the first and second handle portions 46, 48 (indicated by arrows 58) to separate the first handle portion 46 from the second handle portion 48. As the clinician pulls the first handle portion 46 away from the endodontic obturator 10 (indicated by arrow 60), the wire 18 slides out of the carrier 12 and through the second handle portion 48. The clinician may apply pressure on the second handle portion 48 (indicated by arrow 62) to prevent the carrier 12 and/or the sheath 14 from moving out of the root canal 20 due to the movement of the wire 18, as shown in FIG. 2C. The removal of the wire 18 creates hydraulic pressure within the carrier 12 and causes the gutta percha to fill the void left by the wire 18. In other words, the cavity 30 of the carrier 12 is not present after the wire 18 is withdrawn, as shown in FIG. 2D. The clinician may then remove the second handle portion 48 from the endodontic obturator 10. Removing the wire 18 from the endodontic obturator 10 allows for easier retreatment as compared to a wire or electrode that remains in the root canal 20. FIG. 3 illustrates the tooth 22 with the endodontic obturator 10 sealing the apex 38 of the root canal 20 after the obturation is complete.

In an embodiment, a method of making the endodontic obturator 10 includes molding the carrier 12 around the wire 18, molding the sheath 14, and coupling the carrier 12 and sheath 14. The wire 18 is secured to the first handle portion 46. High temperature gutta percha is molded around the wire 18 to form the carrier 12. A portion of the wire 18 will extend out of the second end 28 of the carrier 12. The sheath 14 is molded over the carrier 12 and the portion of the wire 18 extending from the carrier 12 using low temperature gutta percha (i.e., gutta percha with a lower melting temperature than the gutta percha used to mold the carrier 12).

One of ordinary skill will recognize that other methods of making the endodontic obturator 10 are possible. For example, in an embodiment, the wire 18 may be inserted into the carrier 12 and the sheath 14. In another embodiment, the carrier 12 may be glued into the sheath 14. In a further embodiment, the sheath 14 is molded separately from the carrier 12, and the carrier 12 and sheath 14 are coupled using an interference fit. To create an interference fit, the carrier 12 is slightly larger than the cavity 40 of the sheath 14. For example, in an embodiment where the carrier 12 includes the tapered body 24 having a 4% taper and the second end 28 having a 0.25 mm tip, the sheath 14 may include the tapered body 32 having a 4% taper and the tip 44 of the cavity 40 being a 0.20 mm tip. The carrier 12 may be inserted through a silicone stopper (not shown) to facilitate the process of coupling the carrier 12 and the sheath 14. The stopper may be positioned about 16 mm to 18 mm up the carrier 12 from the second end 28. The carrier 12 is then carefully inserted into the cavity 40 of the sheath 14. The carrier 12 may be pushed as far as possible within the cavity 40 without breaking the carrier 12 or the sheath 14 to create an interference fit.

While the present invention has been illustrated by the description of specific embodiments thereof, and while the embodiments have been described in considerable detail additional advantages and modifications will readily appear to those skilled in the art. The various features discussed herein may be used alone or in any combination.

## Claims

1. An endodontic obturator (10) for obturating a root canal comprising:
a wire (18) made of a conductive material;
a carrier (12) configured to releasably couple to the wire (18), the carrier (12) being made of a first thermoset material; and
a sheath (14) configured to slidably receive the carrier (12), the sheath (14) being made of a second thermoset material;
wherein a melting temperature of the second thermoset material is lower than a melting temperature of the first thermoset material.

2. The endodontic obturator (10) of claim 1, further comprising:
a handle (16) configured to be coupled to the wire (18).

3. The endodontic obturator (10) of claim 2, wherein the wire (18) extends out of the handle (16) and includes a metal contact portion (56).

4. The endodontic obturator (10) of either claim 2 or claim 3, wherein the handle (16) includes a first handle portion (46) releasably coupled to a second handle portion (48), the first handle portion (46) being coupled to the wire (18) and the second handle (48) portion being adjacent to at least one of the carrier (12) and the sheath (14).

5. The endodontic obturator (10) of claim 4, wherein the handle (16) includes a frangible projection or lip that couples the first and second handle portions (46, 48).

6. The endodontic obturator (10) of either claim 4 or claim 5, wherein the first handle portion (46) includes a channel (50) configured to secure the wire (18).

7. The endodontic obturator (10) of claim 6, wherein the first handle portion (46) includes a crimp (52) that secures the wire (18) in the channel (50).

8. The endodontic obturator (10) of any one of the preceding claims, wherein the first thermoset material and the second thermoset material both include gutta percha.

9. The endodontic obturator (10) of any one of the preceding claims, wherein the first thermoset material and the second thermoset material include heat conductive particles.

10. The endodontic obturator (10) of any one of the preceding claims, wherein the wherein the handle (16) is made of a material different from that of the first thermoset material and the second thermoset material.

11. A method of making an endodontic obturator (10) comprising:
molding a carrier (12) made of a first thermoset material around a conductive wire (18), the carrier (12) configured to be releasably coupled to the wire (18);
molding a sheath (14) made of a second thermoset material; and
coupling the carrier (12) and the sheath (14);
wherein a melting temperature of the second thermoset material is lower than a melting temperature of the first thermoset material.

12. The method of claim 11, wherein the first thermoset material and the second thermoset material both include gutta percha.

13. The method of either claim 11 or claim 12, wherein the first thermoset material and the second thermoset material include heat conductive particles.

14. The method of any one of claims 11 to 13, wherein coupling the carrier (12) and the sheath (14) includes creating an interference fit between the carrier (12) and the sheath (14).

## Patentansprüche

1. Endodontischer Obturator (10) zum dichten Verschließen eines Wurzelkanals, umfassend:
einen aus einem leitenden Material hergestellten Draht (18),
einen Träger (12), der dazu konfiguriert ist, freigebbar an den Draht (18) zu koppeln, wobei der Träger (12) aus einem ersten duroplastischen Material hergestellt ist, und
eine zur verschiebbaren Aufnahme des Trägers (12) konfigurierte Hülse (14), wobei die Hülse (14) aus einem zweiten duroplastischen Material hergestellt ist,
wobei eine Schmelztemperatur des zweiten duroplastischen Materials niedriger als eine Schmelztemperatur des ersten duroplastischen Materials ist.

2. Endodontischer Obturator (10) nach Anspruch 1, ferner umfassend:
einen Griff (16), der dazu konfiguriert ist, an den Draht (18) gekoppelt zu werden.

3. Endodontischer Obturator (10) nach Anspruch 2, wobei sich der Draht (18) aus dem Griff (16) heraus erstreckt und einen metallischen Kontaktabschnitt (56) aufweist.

4. Endodontischer Obturator (10) nach Anspruch 2 oder Anspruch 3, wobei der Griff (16) einen ersten Griffabschnitt (46) aufweist, der freigebbar an einen zweiten Griffabschnitt (48) gekoppelt ist, wobei der erste Griffabschnitt (46) an den Draht (18) gekoppelt ist und der zweite Griffabschnitt (48) dem Träger (12) und/oder der Hülse (14) benachbart ist.

5. Endodontischer Obturator (10) nach Anspruch 4, wobei der Griff (16) einen zerbrechlichen Vorsprung oder eine zerbrechliche Lippe aufweist, der bzw. die den ersten und den zweiten Griffabschnitt (46, 48) koppelt.

6. Endodontischer Obturator (10) nach Anspruch 4 oder Anspruch 5, wobei der erste Griffabschnitt (46) einen zur Befestigung des Drahts (18) konfigurierten Kanal (50) aufweist.

7. Endodontischer Obturator (10) nach Anspruch 6, wobei der erste Griffabschnitt (46) eine Crimpung (52) aufweist, mit der der Draht (18) in dem Kanal (50) befestigt ist.

8. Endodontischer Obturator (10) nach einem der vorhergehenden Ansprüche, wobei sowohl das erste duroplastische Material als auch das zweite duroplastische Material Guttapercha aufweisen.

9. Endodontischer Obturator (10) nach einem der vorhergehenden Ansprüche, wobei das erste duroplastische Material und das zweite duroplastische Material wärmeleitende Partikel aufweisen.

10. Endodontischer Obturator (10) nach einem der vorhergehenden Ansprüche, wobei der Griff (16) aus einem Material hergestellt ist, das von dem des ersten duroplastischen Materials und des zweiten duroplastischen Materials verschieden ist.

11. Verfahren zur Herstellung eines endodontischen Obturators (10), umfassend:
Formen eines aus einem ersten duroplastischen Material hergestellten Trägers (12) um einen leitenden Draht (18) herum, wobei der Träger (12) dazu konfiguriert ist, freigebbar an den Draht (18) gekoppelt zu sein,
Formen einer aus einem zweiten duroplastischen Material hergestellten Hülse (14) und
Koppeln des Trägers (12) und der Hülse (14),
wobei eine Schmelztemperatur des zweiten duroplastischen Materials niedriger als eine Schmelztemperatur des ersten duroplastischen Materials ist.

12. Verfahren nach Anspruch 11, wobei sowohl das erste duroplastische Material als auch das zweite duroplastische Material Guttapercha aufweisen.

13. Verfahren nach Anspruch 11 oder Anspruch 12, wobei das erste duroplastische Material und das zweite duroplastische Material wärmeleitende Partikel aufweisen.

14. Verfahren nach einem der Ansprüche 11 bis 13, wobei durch das Koppeln des Trägers (12) und der Hülse (14) eine Presspassung zwischen dem Träger (12) und der Hülse (14) entsteht.

## Revendications

1. Obturateur endodontique (10) permettant d'obturer un canal radiculaire comprenant :
un fil (18) constitué d'un matériau conducteur ;
un support (12) conçu pour s'accoupler de façon libérable avec le fil (18), le support (12) étant composé d'un premier matériau thermodurci ; et
une gaine (14) conçue pour recevoir de façon coulissante le support (12), la gaine (14) étant composée d'un second matériau thermodurci ;
dans lequel une température de fusion du second matériau thermodurci est inférieure à une température de fusion du premier matériau thermodurci.

2. Obturateur endodontique (10) selon la revendication 1, comprenant en outre :
une poignée (16) conçue pour être accouplée au fil (18).

3. Obturateur endodontique (10) selon la revendication 2, dans lequel le fil (18) s'étend hors de la poignée (16) et comprend une partie de contact métallique (56) .

4. Obturateur endodontique (10) selon l'une ou l'autre de la revendication 2 et de la revendication 3, dans lequel la poignée (16) comprend une première partie poignée (46) accouplée de façon libérable à une seconde partie poignée (48), la première partie poignée (46) étant accouplée au fil (18) et la seconde partie poignée (48) étant adjacente au support (12) et/ou à la gaine (14).

5. Obturateur endodontique (10) selon la revendication 4, dans lequel la poignée (16) comprend une saillie ou lèvre frangible qui accouple les première et seconde parties poignée (46, 48).

6. Obturateur endodontique (10) selon l'une ou l'autre de la revendication 4 et de la revendication 5, dans lequel la première partie poignée (46) comprend un canal (50) conçu pour sécuriser le fil (18).

7. Obturateur endodontique (10) selon la revendication 6, dans lequel la première partie poignée (46) comprend une sertissure (52) qui sécurise le fil (18) dans le canal (50).

8. Obturateur endodontique (10) selon l'une quelconque des revendications précédentes, dans lequel le premier matériau thermodurci et le second matériau thermodurci comprennent tous les deux de la gutta-percha.

9. Obturateur endodontique (10) selon l'une quelconque des revendications précédentes, dans lequel le premier matériau thermodurci et le second matériau thermodurci comprennent des particules thermoconductrices.

10. Obturateur endodontique (10) selon l'une quelconque des revendications précédentes, dans lequel la poignée (16) est composée d'un matériau différent de celui du premier matériau thermodurci et du second matériau thermodurci.

11. Procédé de fabrication d'un obturateur endodontique (10) consistant à :
mouler un support (12) composé d'un premier matériau thermodurci autour d'un fil conducteur (18), le support (12) étant conçu pour être accouplé de façon libérable au fil (18) ;
mouler une gaine (14) composée d'un second matériau thermodurci ; et
accoupler le support (12) et la gaine (14) ;
dans lequel une température de fusion du second matériau thermodurci est inférieure à une température de fusion du premier matériau thermodurci.

12. Procédé selon la revendication 11, dans lequel le premier matériau thermodurci et le second matériau thermodurci comprennent tous les deux de la gutta-percha.

13. Procédé selon l'une ou l'autre de la revendication 11 et de la revendication 12, dans lequel le premier matériau thermodurci et le second matériau thermodurci comprennent des particules thermoconductrices.

14. Procédé selon l'une quelconque des revendications 11 à 13, dans lequel l'accouplement du support (12) et de la gaine (14) consiste à créer un ajustement serré entre le support (12) et la gaine (14).
